# EUROPEAN PATENT APPLICATION

(11) **EP 2 030 866 A1**
(43) Date of publication of application: **04.03.2009**
(21) Application number: 06744493.5
(22) Date of filing: 12.04.2006
(51) Int. Cl.: B62D 1/06

(54) **STEERING WHEEL THAT HAS AN INTERMEDIATE CORK COVER AND METHOD FOR OBTAINING SAME**

(71) Applicant: Grupo Empresarial Seser, S.A. de C.V., Naucalpan, Edo. de Mexico 53750 (MX)
(72) Inventor: GARCIA-MEJIA, Arturo, Aurelio, Naucalpan, Edo. De Mexico, 53750 (MX)
(74) Representative: Thum, Bernhard
(86) International application number: PCT/IB2006/000868
(87) International publication number: WO 2007/116236

(57) **Abstract**

The present invention describes an automotive steering wheel having a frame, which includes a central hub portion; a ring radially spaced from the central hub portion and having a gripping section; and spokes or arms joining the ring to the central hub portion; the steering wheel is provided with an intermediate cork cover wrapping at least a segment of the ring of said frame; said intermediate cover being formed by two complementary halves joining each other. On this intermediate cork cover there is a decorative layer for the purpose giving the steering wheel an aesthetic appearance and a sense of comfort, preferably, such decorative layer is made of wood. A process for manufacturing this kind of steering wheel is also disclosed.

## Description

### FIELD OF THE INVENTION

The present invention relates to techniques used in designing components and spare parts of automotive industry, and more specifically, relates to a steering wheel having an intermediate cork cover, as well as the process for obtaining such steering wheel.

### BACKGROUND OF THE INVENTION

It is well known that steering wheels are used to guide land vehicles such as cars, trucks, tractors, and also they are necessary to drive sea vehicles such as for example, boats, motorboats, etc. In spite of a great variety of steering wheel styles and sizes, these have three basic parts which are: i) a central hub portion coupling the steering system; ii) a ring radially spaced from the central hub and having a gripping section for grasping the steering wheel; and, iii) spokes or arms connecting the central hub to the ring.

Structurally, steering wheels are integrated by a frame or metal base, including of course, a central hub; a ring radially spaced from the hub; and, spokes or arms joining the central hub to the ring. The steering wheel frame generally is manufactured with some metal having such a resistance and hardness that, by moving the steering wheel manually, it allows the transmission of torque to the vehicle steering system actuator.

It is important to note that in a finished steering wheel, the frame may not be totally exposed, since it would damage the driver in case of collision apart from lacking of comfortable grip of the steering wheel, therefore a cover made of polymeric material such as polyurethane or some other resin, is applied partially or totally over the ring region or even steering wheels are covered with wood, and said cover must have such a shape that allows the provision of ergonomic features to the steering wheel in order to grip it snugly.

Moreover, in order to improve the aesthetics of the whole steering wheel mostly on the gripping zone, and to achieve comfort when driving the vehicle, the cover is applied with a decorative layer, which may be for example, leather lining, a sheet of some fine wood or over a decorative metallic film. In some cases, decorative layer may be designed to have other kind of features, such as for example, moisture absorption or against an excessive heating. In this sense, the steering wheel described in Japanese patent application No. 1987 00279143 may be mentioned, in which the metal ring is coated with a cover of foamed polyurethane resin or PVC; and the external surface of this cover includes a quite thin surface layer on which cork powder of very fine particle size, approximately 100 mesh to 200 mesh is incorporated. In addition, cork is mixed with paint.

However, materials used to typically manufacture covers formed or mounted directly on the frame ring involve certain drawbacks during the manufacturing process of a steering wheel. For instance, when steering wheel grips are made of wood, these are too expensive because wood is a natural product and because laborious manufacturing processes are required to work it. Additionally, shapes that may be obtained for wood grips are very limited due to physical characteristics of wood itself.

In connection with the above mentioned, in European patent application No. EP 1 162 125 A2 a method for manufacturing wood steering wheels is described, wherein parts covering the metal frame are obtained from a wood fiber agglomerate that has to be worked and machined until reaching the required shape for the steering wheel. It is evident that in order to form said wood parts covering the frame, tools having quite precise operation controls have to be employed.

Another example of wood steering wheels may be found in US Patent No. 6,038,770, wherein the most important technical contribution is the use of an adhesive in the form of sheets for applying a decorative laminate of wood over the portions located over the ring of the frame. However, this document does not mention any different material for obtaining such portions that coat the ring.

Other steering wheel, which includes a visible portion of wood, may be found in US Patent No. 6,443,030, wherein a wood insert is located on the internal face of the steering wheel ring, however, the coat wrapping the ring is still manufactured with materials typically used. A similar steering wheel is described in US Patent No. 6,637,289, wherein a decorative insert is mounted around the steering wheel ring by means of an array of elements that couple and engage in a particular manner; here, the material of the cover that wraps the frame ring is made of polyurethane. In this case, it is known that when the ring cover is made of injectable polymer, the whole steering wheel should be operated and located in a mold intended to form such a cover.

Likewise, attempts to simplify methods and designs of steering wheel manufacturing have been made and one of these processes is described in US Patent No. 6,273,981, however, the shape of the body coating the ring, as well as the shape of the latter is limited to a circular form, which is not desirable since the grasping on the steering wheel should respond to an ergonomic design, wherein a circular form if the steering wheel cross section is not the most appropriate.

On the other hand, there are more complex structures to coat the frame ring, such as that described in European patent application No. 0,860,343, wherein the ring is coated with a polyurethane layer and in turn, it is covered by two fabric layers, one of these being a backing layer and on which a decorative layer such as wood is applied. In this steering wheel, the main disadvantage is precisely to form the fabric layers over polyurethane in order to form a hard base for the application of wood, such that the driver has the feeling the whole grip body is made of wood. As known, polyurethane expands upon heating and may break the decorative layer in a steering wheel, mainly if this layer is made of wood, reason why in some steering wheels expansion chambers are left or backing layers are provided like in European application No. 0,860,343 in order to allow free expansion of polyurethane and prevent such an expansion be transmitted toward the wood.

Another layer structure for coating the frame ring is described in European patent application No. EP 1 442 957 A1. In the steering wheel disclosed in this application, the ring is coated with a plastic material, while decorative layer comprises a decorative sheet and a support material beneath thereof including a thermoplastic material matrix.

In addition, it should be noted that some steering wheels with a grip totally in plastic are of low cost when special characteristics are not required, however, when it is necessary to obtain a high hardness or density allowing to apply some special decorative layer, the use of plastic also becomes expensive, due to the requirement of employing sophisticated engineering materials such as nylon in order to achieve said hardness.

As a result from the above, there is a technical need to provide a steering wheel in which the ring is covered by a structure of a low cost and easily worked material, and that also may be applied with a decorative layer. In contrast, the cover on the ring must comply with high quality standards demanded mainly by the automotive industry.

### SUMMARY OF THE INVENTION

A different solution with respect to known steering wheels has been developed through the present invention, specifically in relation to an automotive steering wheel having a frame; in which a central hub portion; a ring radially spaced from the central hub portion and having a gripping section; and, at least a spoke or arm joining the ring to the central hub portion are defined; more specifically, the steering wheel of the present invention comprises additionally as its most characteristic elements: an intermediate cork cover wrapping at least a segment of the ring of said frame; said cover being formed by two complementary halves joining each other along said at least ring segment; and, a decorative layer wrapping said intermediate cork cover for the purpose of giving the steering wheel an aesthetic appearance and a sense of comfort.

Regarding the above, it has been found that the intermediate cork cover may satisfy perfectly the automotive industry standards as happens with traditional covers manufactured with polymeric materials such as polyurethane or wood. Nevertheless, the cork cover in the steering wheel of the present invention provides advantages such as its low density, impermeability, elasticity, dimensional stability and thermal isolation which are significant properties in a steering wheel; additionally, the intermediate cork cover may be easily provided with ergonomic designs. Moreover, in the steering wheel of the present invention, cork is a material that reduces the impact force in case of collision.

In a preferred embodiment, the intermediate cork cover wraps the frame ring segment corresponding to the gripping section, while in another preferred embodiment, the intermediate cork cover fully wraps the steering wheel ring. In a specific embodiment, decorative layer applied over the cork cover is made of a precious wood.

In one aspect of the invention, a process for manufacturing the steering wheel aforementioned is disclosed; the process comprises the steps of: mixing cork particles with a curable polyurethane resin; then, casting the prepared mixture into a mold, wherein therefrom both halves of the intermediate cork cover wrapping at least a frame ring segment are obtained; curing the cork mixture; then, carrying out the step of demolding the cork layer halves obtained in the mold. Thereafter, a decorative layer is applied on the cork layer halves obtained in the prior step; and finally, the cork halves already having the decorative layer over said at least ring segment are joined, such that both halves totally wrap said frame ring segment and be joined to each other.

In a preferred embodiment of the process, from the mold only one half may be obtained that corresponds to the whole ring of the frame, while the other half is obtained in a second mold. Forming the cork halves by molding, allows the ready provision of a great variety of ergonomic designs for the steering wheel.

In an alternative embodiment of the process, molding and decorative layer application steps are both integrated in a single step, wherein a preformed wood sheet is initially located inside the mold and then the mixture of cork and polyurethane is cast accordingly, once curing and demolding steps are effected; the decorative layer and the cork cover half are joined in a single piece due to polyurethane resin.

As may be seen from the above, it is an object of the present invention to provide a steering wheel in which the cover of the ring is of easy construction and may be provided with ergonomic designs.

Another object of the present invention is to provide a process that allows to manufacture a steering wheel having an intermediate cork cover, the process comprising steps where elements of the cork cover are prevented to be formed directly on the steering wheel ring as is the case in the prior art with other materials.

### BRIEF DESCRIPTION OF THE DRAWINGS

The novel aspects considered characteristic of the present invention are particularly established in the annexed claims. However, the invention itself, both by its structure and operation method, along with other objects and advantages thereof, will be better understood from the following detailed description of preferred embodiments when read in connection with the accompanying drawings, in which:
Figure 1 is a front perspective view of a steering wheel having an intermediate cork cover, wherein a part of said cover has been removed to illustrate the frame ring; the frame being constructed according to a first embodiment of the present invention.
Figure 2 is a front view of the steering wheel illustrated in figure 1.
Figure 3 is a front view of the frame forming part of the steering wheel illustrated in figure 1.
Figure 4 is a cross-sectional view taken along line A-A' in steering wheel of figure 2.
Figure 5 is an exploded view of the steering wheel shown in figure 4.
Figure 6 is a block diagram illustrating process steps for manufacturing the steering wheel of the present invention, the process being ordered according to one preferred embodiment.
Figure 7 is a top and front perspective view of a first mold that may be employed in the molding step of the process of the present invention.
Figure 8 is a top and front perspective view of a second mold that may be employed in the molding step of the process of the present invention.
Figure 9 is a cross-sectional partial view taken along line B-B' of figure 7, wherein the mold is in open position.
Figure 9A is the same view as figure 9 only including a wood sheet inside the mold.
Figure 10 is the view in closed position of the mold illustrated in figure 9.
Figure 11 is a front view of one of the cork cover halves obtained through the mold illustrated in figure 7.
Figure 12 is a front view of one of the cork cover halves obtained through the mold illustrated in figure 8.

### DETAILED DESCRIPTION OF THE INVENTION

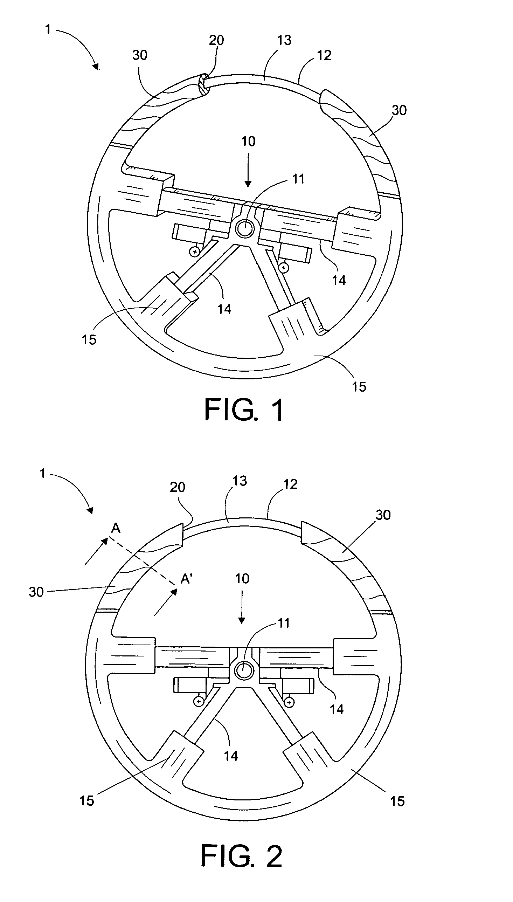

Specifically referring to figures 1 and 2 of the annexed drawings, these show a steering wheel 1, constructed according to the principles of a first preferred embodiment of the present invention, which must be considered illustrative rather than limitative of the same. The steering wheel 1 has a frame identified with reference numeral 10, in which a central hub portion 11, a ring 12 radially spaced from the central hub portion 11 and having a gripping section 13 in the top; and spokes or arms 14 joining the ring 12 to the central hub portion 11 are defined. This basic design of the frame 10 is shared by all steering wheels known in the prior art, and as it is well known, frame 10 is preferably made of a metal. In figures 1 and 2, gripping section 13 of ring 12 is wrapped by an intermediate cork cover 20 from which a part has been removed from the steering wheel 1 for the purpose of illustrating the ring 12 of the frame 10.

Furthermore, in these figures it may be noted that over the cork cover 20; there is a decorative layer 30 intended to give the steering wheel an aesthetic appearance and sense of comfort; preferably, the decorative layer is a sheet of precious wood. Likewise, it can be mentioned that the lower part of the frame 10 is covered by a coating material 15 such as those widely known in the prior art. However, there is no obstacle for the whole ring 12 of the frame 10 to be wrapped by the intermediate cork cover 20, whose most specific characteristics as well as those of decorative layer 30 will be explained below.

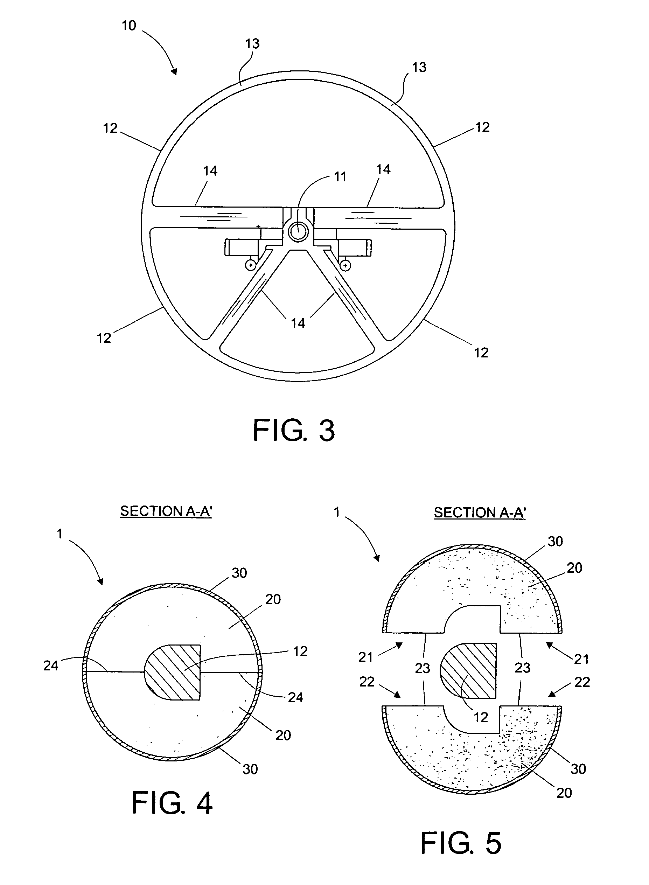

In figure 3, the frame structure 10 of steering wheel 1 is more clearly appreciated, wherein the central hub portion 11 coupling to the vehicle steering system, the ring 12 which as mentioned, is radially spaced from the central hub portion 11, the gripping section 13, on which it is preferred to apply the intermediate cork cover and the spokes 14 joining the central hub portion 11 to the ring 12 may be distinguished. As stated, this is the basic structure that may be found in any steering wheel.

Now, referring to figures 4 and 5, the characteristics of intermediate cork cover 20 covering a segment of the ring 12 of steering wheel 1 are disclosed more deeply. Particularly, intermediate cork cover 20 is formed by two complementary halves 21 and 22 joined to each other along the segment of the ring 12 which is to be covered, in this case, the gripping section of steering wheel 1. More specifically, halves 21 and 22 have a pair of bonding faces 23 diametrically opposites when viewed relative to the ring 12 cross-section and running parallel to said ring 12. In figures 4 and 5, it may be observed that bonding faces 23 have a substantially flat contact surface, such that when viewed in cross-section, they seem to form a single body for said intermediate cork cover 20, between both halves 21 and 22, of course, there is a partition line 24 which is imperceptible in the finished product, although in figure 4, said partition line 24 has been represented only with the purpose of distinguishing halves 21 and 22 from the intermediate cork cover 20. In this regard, automobile manufacturers demand that coatings applied to steering wheel frame appear to be formed in one single piece, if the partition line 24 is evident, steering wheels would be rejected; having an imperceptible partition line 24 is one of the advantages provided by the use of cork as the manufacturing material of intermediate cover 20, in fact, as will be described in the manufacturing process of the steering wheel, both halves are integrated as forming one single piece, additionally, halves 21 and 22 of the intermediate cork cover 20 may have different shapes to give the steering wheel an ergonomic design, which is easy to perform precisely due to the simplicity of molding or extruding cork.

As mentioned, the intermediate cork cover 20 wraps preferably the gripping segment 13 of ring 12, however, there are no restrictions for the intermediate cork cover 20 to wrap completely the frame ring 12 along its perimeter extension. Likewise, in the prior art it is known that in steering wheels, the ring may have differently shaped cross sections, however, this does not represent an obstacle for the ring 12 to be wrapped by the cork cover 20 formed by halves 21 and 22, joined by means of an adhesive, more preferably, a polyurethane adhesive.

Also, the intermediate cork cover 20 is formed by natural, impure cork particles or mixed with rubber having an average particle size of 0.5 mm to 3 mm and agglomerated by a polyurethane resin; even powder may be employed. There is no cover made of cork disclosed in the prior art for this purpose. In regards to physical properties of intermediate cork cover 20, it has a shore A hardness approximately greater than 50; a shore D hardness approximately less than than 85; and a density from approximately 45 kg/m³ to approximately 120 kg/m³, this density is less than in relation to the density of polyurethane or wood typically employed in steering wheels, whose values range between 300-600 kg/m³ and 1280 kg/m³, respectively. The advantage of a lower weight in the steering wheel of the present invention is evident. According to the above, hardness is an important parameter to take into consideration for decorative layer 30, which may also be appreciated in figures 4 and 5, for wood finishes, a high hardness in the intermediate cork cover is preferred such that at the moment the driver grasps the steering wheel he/she feels the steering wheel is totally made of wood.

Decorative layer 30 consists basically of a film made of a material selected from the group comprising: wood, plastic, metal, leather or vinyl. In the preferred embodiment of the present invention, the film is produced from a precious wood selected from the group comprising walnut, maple, eucalyptus, poplar, birch, etc. Furthermore, when decorative layer 30 is produced from a precious wood, it additionally includes a varnish coat. Due to the characteristics of the intermediate cork cover 20 as well as decorative layer 30, partition line 24 may not be either distinguished on the decorative layer 30 in a steering wheel constructed according to the present invention.

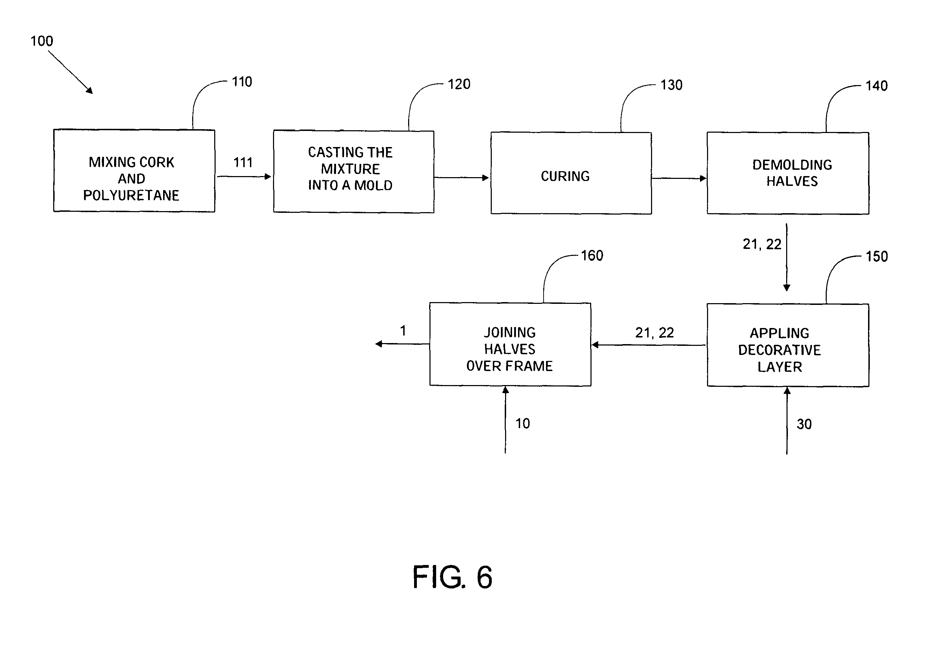

Referring now to figure 6, in order to disclose a preferred embodiment of the process for manufacturing the steering wheel of the present invention, the process identified with reference numeral 100, starts with step 110, wherein cork particles are mixed with a curable polyurethane resin thereby obtaining mixture 111; in a specific embodiment, cork particles used in mixing step 110 are obtained from impure cork particles which are ground and sieved before being mixed. This represents an advantage over the process costs, since any cork piece rejected during the process may be recycled.

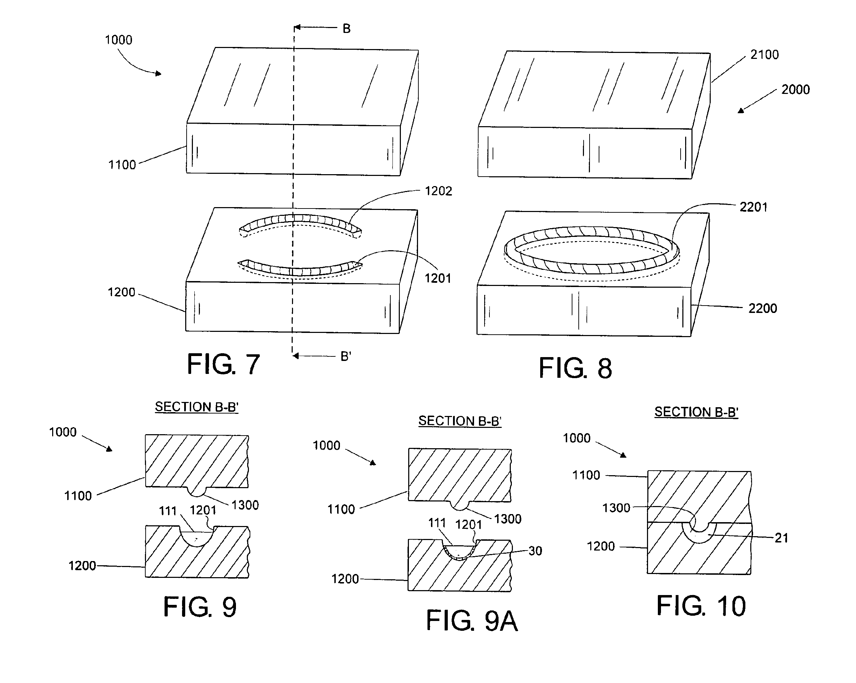

Following the process 100, in step 120, mixture 111 prepared in mixing step 110 is cast into a mold, wherein both halves of the intermediate cork cover wrapping at least one segment of the frame ring are obtained from the mold. In this sense, it is convenient to make reference to figures 7 and 8, in which two different molds are illustrated wherein mixture 111 can be cast into, in the first of said molds and identified with reference numeral 1000 (figure 7) and comprising two cooperating mold halves 1100 and 1200, both halves are obtained which can coat any ring segment of a steering wheel in cavities 1201 and 1202. Meanwhile, in the second mold 2000 (figure 8), and comprising two cooperating mold halves 2100 and 2200, one half of the cork cover is obtained in cavity 2201 with the complete shape of the ring; of course, the other half needed for the intermediate cork cover can be produced in an additional or same mold 2000.

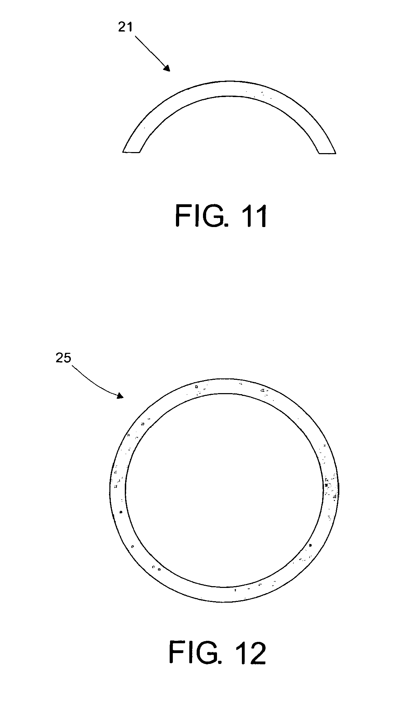

In figures 9, 9A and 10, is shown how mold halves 1100 and 1200 interact on cork mixture 111, which is cast into cavity 1201; in order to shape half 21 of cork cover through protrusion 1300, said half internal face mounted directly on the steering wheel is shaped; with regard to figure 9A, it is worth making clear that before casting the cork mixture 111 into the cavity 1201, a piece of preformed wood sheet is located to shape the steering wheel decorative layer 30; and thereafter, the cork and polyurethane mixture is cast into the mold, as a result, when demolding, decorative layer and cork half will be joined in the same piece due to polyurethane resin. As mentioned throughout the specification, intermediate cork cover can be of any shape since cork is an easily moldable material. In figures 11 and 12, halves of the intermediate cork cover can be appreciated being formed respectively by means of the first mold 1000 or second mold 2000. Specifically, in figure 11 the half of cork 21 is shown located on the ring gripping, while in figure 12, half 25 is obtained in the shape of a complete ring to be mounted on the whole frame ring, the other ring half is obtained from the same mold 2000 or a similar mold.

In order to describe the reminding steps of the process 100, it makes again reference to figure 6, in which after the molding step 120, step 130 is carried out wherein cork mixture is cured inside the mold; this step is preferably performed baking and pressing the mold, for example, at typical temperatures from approximately 110°C to 130°C and at a pressure from approximately 100 kg/cm² to 110 kg/cm², then letting it stand until reaching ambient temperature.

Thereafter, in step 140, halves 21 and 22 are demolded in order to be processed in step 150, where a decorative layer 30 is applied on said halves of cork 21. In step 150, decorative layer 30 is a sheet made from a material selected from the group comprising: wood, plastic, metal, leather or vinyl. Preferably, decorative film used in step e) is made of a precious wood thin sheet, which is applied and attached on cork cover halves 21 and 22 through an adhesive and subjecting it to pressure and heat, thereby deforming the wood sheet in order to conform perfectly to any of the halves.

In a specific embodiment of the process, once precious wood has been applied to cork halves in step 150, an additional trimming step is performed, wherein wood in excess protruding from edges and bonding faces of cork halves is eliminated.

As a final step of the process 100 illustrated in figure 6, step 160 is performed, where, on a portion of frame ring 10, cork halves 21 and 22 are joined already including decorative layer 30 in such a manner that halves completely wrap said frame ring segment. For this step, a polyurethane adhesive is used and both halves are subjected to pressure in order for them to be joined and integrated as forming a single body, whereby the steering wheel 1 is obtained at the end of the step.

In case the decorative layer is a layer of precious wood, after step 160, a finish step is carried out which consists of sanding the precious wood; applying an ink on the wood; applying a sealant; applying a varnish coat; and polishing the varnish coat.

In another embodiment of the process, the molding step 120 may be substituted by an extrusion step wherein cork halves to be used on the frame are obtained from an extruded cork profile, said profile being cut to the required dimensions for covering and adjusting on the ring segment to be coated.

According to the above disclosed and illustrated in the accompanying drawings, it will be noted that automotive steering wheel of the present invention has been designed as an alternative to improve costs and processes; consequently, the steering wheel shall be less expensive and additionally, ergonomic shapes may be obtained mostly in steering wheel gripping section, therefore, it will be obvious for any skilled in this field that previously described embodiments are only illustrative and do not restrict the invention, since there are various modifications that may be effected, such as the shape of each one of the halves for the intermediate cork cover, or the material for decorative layer, such changes without altering the invention's essential scope and function.

While specific embodiments of the invention have been disclosed and illustrated, it should be stressed that it is possible to make various modifications thereto. Therefore, the present invention shall not be considered as restricted except for that demanded in the prior art and the annexed claims.

## Claims

1. A steering wheel having a frame, **characterized in that** a central hub portion; a ring radially spaced from the central hub portion and having a gripping section; and, at least a spoke joining the ring to the central hub portion are defined; the steering wheel being **characterized in that** it additionally comprises:
a) an intermediate cork cover wrapping at least a segment of the ring of said frame; said cover being formed by two complementary halves joining each other along said at least ring segment; and,
b) a decorative layer wrapping said intermediate cork cover for the purpose of giving the steering wheel an aesthetic appearance and a sense of comfort.

2. A steering wheel according to claim 1, further **characterized in that** the halves of said intermediate cork cover have a pair of bonding faces diametrically opposites when viewed relative to the ring cross-section and running parallel to said ring; the bonding faces having a substantially flat contact surface, such that when viewed in cross-section, they seem to form a single body for said intermediate cork cover.

3. A steering wheel according to claim 1, further **characterized in that** the intermediate cork cover wraps the segment corresponding to the ring gripping.

4. A steering wheel according to claim 1, further **characterized in that** the intermediate cork cover wraps completely the ring of said frame along its perimetral extension.

5. A steering wheel according to claim 1, further **characterized in that** the intermediate cork cover is formed by natural cork particles, impure cork particles or mixed with rubber having an average particle size of 0.5 mm to 3 mm and agglomerated by a polyurethane resin.

6. A steering wheel according to claim 1, further **characterized in that** said intermediate cork cover has a shore A hardness greater than 50; a shore D hardness approximately less than 85; and a density from 45 kg/m³ to 120 kg/m³.

7. A steering wheel according to claim 1, further **characterized in that** both halves of said intermediate cork cover are joined by means of an adhesive.

8. A steering wheel according to claim 7, further **characterized in that** the adhesive is a polyurethane adhesive.

9. A steering wheel according to claim 1, further **characterized in that** the decorative layer consists of a film made of a material selected from the group comprising: wood, plastic, metal, leather or vinyl.

10. A steering wheel according to claim 9, further **characterized in that** the decorative layer is made of a precious wood.

11. A steering wheel according to claim 10, further **characterized in that** the precious wood is selected from the group comprising walnut, maple, eucalyptus, poplar, birch.

12. A steering wheel according to claim 10, further **characterized in that** the precious wood is covered by a varnish coat.

13. A process for manufacturing a steering wheel, as defined in claim 1, the process being **characterized in that** it comprises the steps of:
a) mixing cork particles with a curable polyurethane resin;
b) casting into a mold the mixture prepared in step a), wherein from the mold both halves of the intermediate cork cover wrapping at least a frame ring segment are obtained;
c) curing the cork mixture;
d) demolding the cork layer halves obtained in the mold;
e) applying a decorative layer on the cork layer halves obtained in step d); and,
f) joining the cork halves with the decorative layer over said at least ring segment, such that both halves totally wrap said frame ring segment and be joined to each other.

14. A process for manufacturing a steering wheel according to claim 13, further **characterized in that** the halves obtained correspond to the segment of the frame ring gripping section.

15. A process for manufacturing a steering wheel according to claim 13, further **characterized in that** from the mold only one half is obtained that corresponds to the whole ring of the frame, while the other half is obtained in a second mold.

16. A process for manufacturing a steering wheel according to claim 13, further **characterized in that** the cork particles are obtained from impure cork particles which are ground and sieved before being mixed in step a).

17. A process for manufacturing a steering wheel according to claim 13, further **characterized in that** curing step c) is performed baking and pressing the mold, and then letting it stand until reaching ambient temperature.

18. A process for manufacturing a steering wheel according to claim 13, further **characterized in that** the decorative layer applied in step e) is a sheet made of a material selected from group comprising: wood, plastic, metal, leather or vinyl.

19. A process for manufacturing a steering wheel according to claim 18, further **characterized in that** the decorative film used in step e) is made of a precious wood sheet.

20. A process for manufacturing a steering wheel according to claim 18, further **characterized in that** the decorative film applied in step e) is a precious wood sheet applied and attached on the cork cover halves by means of an adhesive and deforming the wood by means of pressure and heat.

21. A process for manufacturing a steering wheel according to claim 20, further **characterized in that** once precious wood has been applied on the cork halves in step e), an additional trimming step is performed, wherein wood in excess protruding from edges and bonding faces of the cork halves is eliminated.

22. A process for manufacturing a steering wheel according to claim 20, further **characterized in that** once the decorative film has been applied to the cork halves and these are joined on the steering wheel in step f), the process comprises additionally a finish stage consisting of the following steps:
i) sanding the precious wood;
ii) applying an ink on the wood;
iii) applying a sealant;
iv) applying a varnish coat; and
v) polishing the varnish coat.

23. A process for manufacturing a steering wheel according to claim 13, further **characterized in that** the cast into mold step b) is substituted by an extrusion step, wherein cork halves are obtained from an extruded cork profile, said profile being cut to the required dimensions for covering and adjusting on the ring segment.

24. A process for manufacturing a steering wheel according to claim 13, further **characterized in that** the steps of molding b) and decorative layer application e) are both integrated in a single step, wherein a preformed wood sheet is initially located inside the mold and then the mixture of cork and polyurethane prepared in step a) is cast, accordingly, once the curing and demolding steps c) and d) are effected; the decorative layer and the cork cover half are joined in a single piece due to polyurethane resin.
